(19) Europäisches Patentamt
European Patent Office
Office européen des brevets

(11) **EP 3 543 807 B1**

(12) **FASCICULE DE BREVET EUROPEEN**

(45) Date de publication et mention
de la délivrance du brevet:
**06.01.2021   Bulletin 2021/01**

(51) Int Cl.:
***G05B 19/19*** *(2006.01)*

(21) Numéro de dépôt: **19162245.5**

(22) Date de dépôt: **12.03.2019**

(54) **METHODE POUR LIMITER LES PHÉNOMÈNES VIBRATOIRES A L' INTERFACE PIECE/OUTIL**

METHODE ZUR BEGRENZUNG VON SCHWINGUNGSPHÄNOMENEN AN DER WERKSTÜCK-WERKZEUG-SCHNITTSTELLE

METHOD FOR LIMITING VIBRATORY PHENOMENA AT THE PART/TOOL INTERFACE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **20.03.2018   CH 3582018**

(43) Date de publication de la demande:
**25.09.2019   Bulletin 2019/39**

(73) Titulaire: **Willemin-Macodel SA**
**2800 Delemont (CH)**

(72) Inventeurs:
• **HERZOG, Raoul**
**1424 Champagne (CH)**
• **SCHORDERET, Alain**
**1400 Cheseaux-Noréaz (CH)**
• **JACQUOD, Nicolas**
**1040 Echallens (CH)**
• **MARCHAND, Yoan**
**1005 Lausanne (CH)**

(74) Mandataire: **Pronovem**
**Pronovem Swiss Ltd**
**Case Postale 2243**
**2800 Delémont 2 (CH)**

(56) Documents cités:
**US-A1- 2010 032 879**

• **OKWUDIRE C ET AL: "A trajectory optimization method for improved tracking of motion commands using CNC machines that experience unwanted vibration", CIRP ANNALS, ELSEVIER BV, NL, CH, FR, vol. 65, no. 1, 7 juin 2016 (2016-06-07), pages 373-376, XP029626942, ISSN: 0007-8506, DOI: 10.1016/J.CIRP.2016.04.100**
• **ALTINTAS Y ET AL: "Contour error control of CNC machine tools with vibration avoidance", CIRP ANNALS, vol. 61, no. 1, 2 avril 2012 (2012-04-02), pages 335-338, XP028511147, ISSN: 0007-8506, DOI: 10.1016/J.CIRP.2012.03.132 [extrait le 2012-04-02]**

## Description

Objet de l'invention

La présente invention concerne le domaine de l'usinage. Elle se rapporte plus précisément à une méthode appliquée au niveau de la commande d'axes de machine-outil dans le but de réduire les phénomènes vibratoires indésirables à l'interface pièce-outil.

Arrière-plan technologique et état de la technique

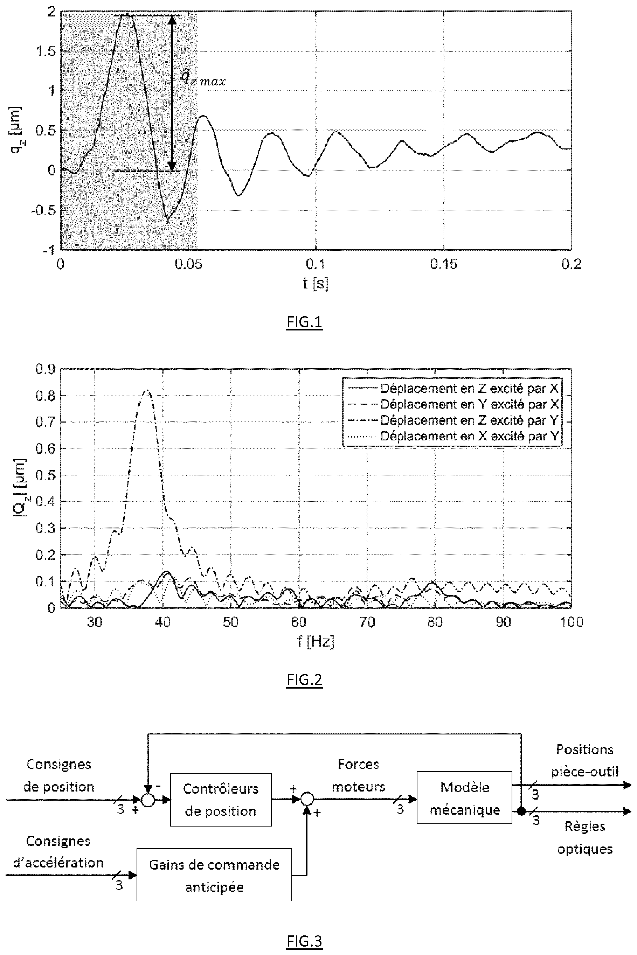

Les phénomènes vibratoires dans les machines d'usinage sont à l'origine de défauts qui pénalisent grandement la qualité d'usinage et, en conséquence, la productivité de la machine. L'amplitude de ces vibrations peut être relativement importante lorsqu'une fréquence propre de la machine est excitée. A titre d'exemple, la figure 1 illustre ce phénomène avec des vibrations dans la direction Z engendrées par un déplacement linéaire dans le plan XY. Lors de l'accélération d'un des axes dans le plan XY représentée à gauche par la partie grisée, un pic est observé suivi de vibrations résiduelles lors de la phase à vitesse constante de l'axe (partie claire).

Pour remédier à ce problème, certaines commandes numériques sont munies de filtres pour atténuer les fréquences gênantes. Cette optimisation est réalisée au niveau de la boucle de régulation prenant en compte le déplacement entre le moteur et la règle de mesure. Pour certains modes vibratoires de la machine, il est possible que ce déplacement moteur-règle ne soit pas affecté alors que le déplacement pièce-outil l'est. La commande reste dès lors "aveugle" vis-à-vis de ces déplacements et donc incapable de les compenser.

D'autres solutions pour réduire l'influence des fréquences propres critiques sur le comportement de la machine existent et consistent à adapter le profil d'accélération des axes de manière à éviter d'exciter les modes vibratoires, dits compliants, qui génèrent des déplacements relatifs importants entre la pièce et l'outil dans une direction donnée.

Cette dernière solution bien que prometteuse présente pour désavantage qu'il peut s'avérer impossible d'implémenter une optimisation du profil d'accélération pour une configuration de matériel donnée, c.à.d. pour certains types de commande numérique. Le document XP029626942, Okwudire C. et .: "A trajectory optimization method for improved tracking of motion commands using CNC machines that experience unwanted vibration", pages 373-376 du volume 65, numéro 1 de CIRP Annals en date du 07 juin 2016, divulgue une méthode d'optimisation pour limiter les phénomèmes vibratoires sur les machines d'usinage.

Il s'avère alors nécessaire de trouver une autre solution pour limiter les phénomènes vibratoires sur les machines d'usinage.

Résumé de l'invention

La présente invention a ainsi pour objet principal de proposer une méthode permettant de réduire significativement l'effet des modes vibratoires perturbateurs au niveau pièce-outil.

A cet effet, la méthode selon l'invention a pour objet d'appliquer une compensation sur au moins un axe machine, dit axe compliant, soumis à des vibrations suite à l'accélération d'un ou plusieurs autres axes machines, dits axes d'excitation.

Selon l'invention, la compensation est dynamique, c'est-à-dire qu'elle est appliquée lors de la phase d'accélération des axes d'excitation ainsi que pendant la phase à vitesse constante postérieure à la phase d'accélération. Cette compensation permet de réduire, voire annuler, le déplacement relatif pièce-outil dans la direction de l'axe compliant.

D'autres avantages ressortiront des caractéristiques exprimées dans les revendications, de la description détaillée de l'invention illustrée ci-après à l'aide des dessins annexés donnés à titre d'exemples nullement limitatifs.

## Brève description des figures

La figure 1 représente de manière connue les vibrations en Z induites par le déplacement de l'axe Y. La partie gauche en grisé représente l'amplitude des vibrations en Z lors de la phase d'accélération de l'axe Y avec un profil en cloche, suivie par l'amplitude des vibrations durant la phase à vitesse constante de cet axe. Les mesures de vibrations ont été réalisées au moyen du R-Test pour une vitesse d'avance de l'outil de 444 mm/min (F444) sur une commande numérique Heidenhain.

La figure 2 représente, après transformée de Fourier, les vibrations en Z et en Y occasionnées par le déplacement de l'axe X et les vibrations en Z et en X occasionnées par le déplacement de l'axe Y.

La figure 3 représente le schéma bloc du modèle mécanique incluant la boucle de régulation, à partir duquel est générée la fonction de transfert pour la compensation.

La figure 4 représente le schéma bloc pour le calcul de la fonction de transfert de compensation.

La figure 5 illustre l'effet de la compensation dynamique (CDZ) sur le déplacement en Z pour un profil d'accélération en cloche (BellStd) pour les axes X et Y.

## Description générale de l'invention

La méthode selon l'invention est destinée à réduire les phénomènes vibratoires sur une machine d'usinage comprenant 3 axes linéaires X, Y et Z et éventuellement un ou deux axe(s) rotatif(s). Elle s'applique aussi bien aux configurations avec les axes linéaires et/ou rotatifs sur l'outil qu'aux configurations avec les axes linéaires et/ou rotatifs conditionnant le déplacement de la pièce.

La présente méthode est illustrée dans les exemples ci-après pour des déplacements rectilignes selon l'axe X et/ou l'axe Y engendrant des vibrations hors plan XY selon l'axe Z. Il va de soi que, selon l'architecture de la machine d'usinage, les axes soumis aux vibrations peuvent être n'importe lequel des 5 axes et non pas exclusivement l'axe Z.

La méthode selon l'invention s'articule autour des deux étapes suivantes :

1. Identifier le ou les axes compliants de la machine soumis aux vibrations qui vont engendrer un déplacement relatif entre la pièce et l'outil suite à une accélération d'un ou plusieurs axes machines distincts du ou des axes compliants,

2. Appliquer une compensation dans la direction du ou des axes compliants affectés par les phénomènes vibratoires lors de la phase d'accélération et de la phase à vitesse constante suivant la phase d'accélération des axes machines distincts du ou des axes compliants.

## Identification du ou des axes compliants

Un mode vibratoire compliant est principalement caractérisé par sa fréquence propre et sa forme propre. Son caractère compliant est lié à sa propension à générer des déplacements relatifs importants entre la pièce et l'outil dans une direction donnée et, en corollaire, à nuire à la qualité finale de la pièce usinée. On entend par déplacement relatif important un déplacement avec des valeurs supérieures ou égales à 1 $\mu$m ou des valeurs qui sortent de la plage d'erreur de poursuite généralement admise entre le moteur et la règle. En fonction des architectures de machines, les axes sollicités peuvent être différents. Ainsi, dans une machine 3, 4 ou 5 axes, la sollicitation de n'importe quel axe peut engendrer des vibrations compliantes dans une direction colinéaire à un ou plusieurs axes distincts de l'axe de sollicitation.

L'identification du ou des axes compliants peut être réalisée expérimentalement. Ainsi, l'identification des modes compliants peut être réalisée via un ou plusieurs capteurs (accéléromètres, capteurs optiques, etc.) positionnés à certains endroits de la machine. Avantageusement, les systèmes de mesures sont implantés de manière permanente dans des zones préférentielles de la machine préalablement définies au moyen d'analyses modales numériques ou expérimentales consistant dans ce dernier cas à réaliser des mesures avec des capteurs placés à une multitude d'endroits sur la machine. Ces zones ont la particularité d'être très sensibles aux modes compliants tels que définis précédemment. Grâce à l'implantation permanente des systèmes de mesure sur la machine d'usinage, il est possible d'identifier les axes compliants préalablement à l'usinage de chaque pièce si nécessaire. Cela permet d'initier la procédure d'identification des axes compliants dès qu'une dégradation du comportement pièce-outil est observée et, ce, que ce soit entre deux lots ou en plein milieu d'une production.

L'analyse des mesures est réalisée dans le domaine fréquentiel par analyse FFT (Fast Fourier Transformation). A titre d'exemple, les fréquences propres d'une machine d'usinage ont été déterminées sur base des mesures de vibrations réalisées avec le R-Test. Ce test consiste à mesurer les déplacements 3D parasites d'une bille montée en broche et placée entre trois capteurs de déplacement fixes. Ces déplacements parasites se superposent à une trajectoire nominale quelconque, programmée et supposée idéale. Sur la machine d'usinage, deux déplacements uni-axiaux respectivement en X et en Y ont été effectués avec un profil d'accélération triangulaire avec un jerk de 200 m/s$^3$ et une vitesse d'avance de 444 mm/min. Les fréquences des modes propres obtenues en effectuant la transformée de Fourier des vibrations mesurées sont données à la figure 2. Dans l'exemple illustré, le mode le plus important est excité par l'axe Y et crée un déplacement pièce-outil en Z à une fréquence de 37.5 Hz. La compensation dynamique appliquée selon l'invention vise à annihiler ce déplacement.

Alternativement, l'identification du ou des modes compliants peut être réalisée avec un modèle structurel par éléments finis pour une configuration de machine donnée.

## Compensation dynamique

La compensation consiste à ajouter une consigne de position sur le ou les axes soumis aux vibrations pour compenser en tout ou partie les vibrations engendrées par l'accélération des axes. Cette compensation est dynamique, c.à.d. qu'elle est appliquée lors de la phase d'accélération et de la phase à vitesse constante subséquente.

Cette compensation réalisée en temps réel s'appuie sur un modèle complet en boucle fermée incluant un modèle mécanique et la régulation. Ce modèle complet est connu en soi de l'homme de métier et schématisé à la figure 3 pour les 3 axes X, Y et Z. A titre informatif, la description du modèle peut être donnée comme suit :

- La modélisation du système mécanique est basée sur un système de corps rigides représentant chacun un des corps principaux de la machine (châssis, bâti, support croisé, colonne, support bélier).
- Les liaisons entre les corps sont représentées par des rigidités (déplacements linéaires et angulaires) ainsi que des amortissements de type visqueux.
- Les valeurs des paramètres des corps rigides (masses, inerties) ainsi que celles des rigidités de liaisons sont établies a priori sur la base des modèles CAO ainsi que des informations techniques des composants. Ces valeurs peuvent être ajustées au moyen de mesures expérimentales ou de modèles numériques de type éléments finis plus précis.
- Les propriétés d'amortissement des liaisons sont obtenues a posteriori par transformation de coordonnées inverses (modale-matériel) au moyen des valeurs d'amortissement modaux mesurées ou estimées.
- La modélisation complète du système ajoute la régulation au modèle du système mécanique. Les rigidités de régulation inclues dans le modèle mécanique sont supprimées (valeurs nulles) pour l'implémentation avec régulation.

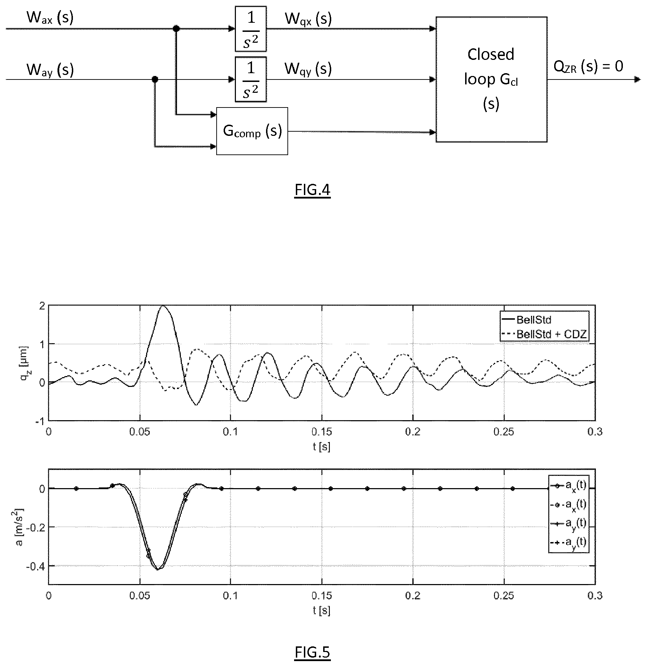

La figure 4 représente de manière plus détaillée le schéma bloc de la boucle fermée sur lequel se greffe la fonction de transfert ($G_{comp}$) selon l'invention qui permet de modifier les consignes de position des axes pour compenser la vibration. Plus précisément, le but de la compensation dynamique appliquée sur l'axe compliant est de générer un signal de compensation idéal comme consigne de position dudit axe, de telle manière à annuler le déplacement relatif pièce-outil selon cet axe causé par l'accélération d'autres axes machines. Les équations ci-après expliquent la démarche pour le calcul de la fonction de transfert de compensation pour une compensation en Z nécessitée par une sollicitation des axes X et Y :

$$Q_{ZR}(s) = G_{clx}(s) \cdot W_{qx}(s) + G_{cly}(s) \cdot W_{qy}(s) + G_{clz}(s) \cdot W_{qz}(s) = 0$$

Connu ⟶ Inconnu

$$\Rightarrow W_{qz}(s) = -\frac{G_{clx}(s)}{G_{clz}(s)} \cdot W_{qx}(s) - \frac{G_{cly}(s)}{G_{clz}(s)} \cdot W_{qy}(s) = -\frac{G_{clx}(s)}{s^2 \cdot G_{clz}(s)} \cdot W_{ax}(s) - \frac{G_{cly}(s)}{s^2 \cdot G_{clz}(s)} \cdot W_{ay}(s)$$

$$\Rightarrow \boxed{G_{comp}(s) = -\frac{G_{clx}(s) + G_{cly}(s)}{s^2 \cdot G_{clz}(s)}}$$

avec s qui est une variable de la transformée de Laplace, $Q_{ZR}$ qui est le déplacement pièce-outil en Z, $W_{ax}$ et $W_{ay}$ qui sont les consignes d'accélération en X et en Y, $W_{qx}$ et $W_{qy}$ qui sont les consignes de position en X et en Y et $G_{clx}$, $G_{cly}$ et $G_{clz}$ qui sont les fonctions de transfert en boucle fermée pour respectivement les axes X, Y et Z.

La formulation ci-dessus peut être étendue à 4 ou 5 axes avec au numérateur des fonctions de transfert additionnelles pour les axes supplémentaires.

En présence de plusieurs axes compliants à compenser, chaque axe compliant est traité séparément avec les algorithmes présentés ci-dessus.

En pratique, le modèle prend comme entrées les consignes de position et d'accélération des axes en mouvement et peut sortir les consignes de position, de vitesse et d'accélération de l'axe à compenser.

Comme indiqué précédemment, les paramètres du modèle complet peuvent être ajustés de manière à le faire correspondre au mieux au comportement réel de la machine soit sur base de simulations, soit sur base de données expérimentales. On peut citer comme solutions de recalage du modèle :

- Recalage sur les fréquences propres obtenues avec un modèle structurel éléments finis de la machine ;
- Recalage sur les fréquences propres mesurées expérimentalement sur la machine ;
- Recalage sur la réponse de la machine suite à une excitation temporelle sur un des axes de la machine.

On précisera que l'ajustement du modèle sur base de mesures expérimentales peut être réalisé une fois ou de manière récurrente.

La figure 5 illustre l'effet de la compensation dynamique sur le déplacement en Z lors d'une accélération en X et Y selon un profil en cloche (BellStd) pour une vitesse d'avance de l'outil de 444 mm/min. Les mesures du déplacement en Z ont été effectuées au moyen du R-Test. On observe que la compensation dynamique (BellStd+CDZ) réduit fortement le déplacement en Z durant la phase d'accélération.

Pour déterminer l'effet de la compensation dynamique sur la qualité d'usinage, différents échantillons ont été usinés partant d'une trajectoire d'outil avec un profil d'accélération en cloche. Une analyse visuelle des échantillons complétée par des mesures au microscope a été réalisée. 4 échantillons comparatifs avec des vitesses d'avance d'outil comprises entre 129 et 645 mm/min (F129 à F645) ont été usinés avec un profil d'accélération en cloche (BellStd) sans compensation dynamique et leur aspect a été comparé à celui d'échantillons usinés à une même vitesse avec un profil d'accélération en cloche couplé à une compensation dynamique (BellStd+CDZ). Des notes de 1 à 10 ont été attribuées pour chacun des échantillons en fonction de leur aspect visuel avec une note 10 correspondant à un aspect miroir (Table 1). Ces tests comparatifs ont permis de conclure que l'application d'une compensation dynamique permet de supprimer les marques de fraise avec, pour corollaire, que la vitesse d'avance peut être augmentée sans dégrader l'état de surface.

Table 1

|  | 129 mm/min | 272 mm/min | 444 mm/min | 645 mm/min |
|---|---|---|---|---|
| Comparatif (BellStd) | 6 | 5 | 4 | 3 |
| Invention (BellStd + CDZ) | 9 | 7 | 6 | 6 |

## Revendications

1. Méthode pour limiter des phénomènes vibratoires à une interface pièce-outil sur une machine d'usinage comprenant 3, 4 ou 5 axes machines, ladite méthode comprenant des étapes de :

   - Identification d'au moins un axe machine, dit axe compliant, susceptible d'être excité lors d'une phase d'accélération d'au moins un axe machine, dit axe d'excitation, qui est distinct dudit au moins axe compliant, et d'induire suite à cette excitation un déplacement relatif entre la pièce et l'outil selon une direction colinéaire avec ledit au moins axe compliant,
   - Application d'une compensation sur chaque axe compliant pendant la phase d'accélération et une phase à vitesse constante suivant la phase d'accélération dudit au moins axe d'excitation pour réduire tout déplacement relatif entre la pièce et l'outil.

2. Méthode selon la revendication 1, **caractérisée en ce que** l'identification dudit au moins axe compliant est réalisée expérimentalement ou sur base de simulations numériques.

3. Méthode selon la revendication 2, **caractérisée en ce que** l'identification dudit au moins axe compliant est réalisée expérimentalement sur base de mesures des fréquences propres de la machine d'usinage.

4. Méthode selon la revendication 3, **caractérisée en ce que** l'identification dudit au moins axe compliant est réalisée sur la machine d'usinage munie d'un ou plusieurs capteurs permettant de mesurer des vibrations induites par la phase d'accélération dudit au moins axe d'excitation, l'identification pouvant être réalisée préalablement à l'usinage de la pièce.

5. Méthode selon l'une quelconque des revendications précédentes, **caractérisée en ce que** l'identification dudit au moins axe compliant est réalisée de manière récurrente ou une seule fois.

6. Méthode selon l'une quelconque des revendications précédentes, **caractérisée en ce que** la compensation à appliquer sur chaque axe compliant est déterminée sur base des consignes de position et d'accélération dudit au moins axe d'excitation.

7. Méthode selon l'une quelconque des revendications précédentes, **caractérisée en ce que** la compensation à appliquer sur chaque axe compliant est déterminée sur base d'une première relation:

$$Q_{CR}(s) = G_{CLE}(s) \cdot W_{QE}(s) + G_{CLC}(s) \cdot W_{QC}(s) = 0$$

avec s qui est une variable de la transformée de Laplace,

$Q_{CR}$ *(s)* qui est le déplacement pièce-outil selon chaque axe compliant qui doit être égal à 0,

$G_{CLE}(s)$ qui est une fonction de transfert en boucle fermée de chaque axe d'excitation, $G_{CLC}(s)$ qui est une fonction de transfert en boucle fermée de chaque axe compliant, $W_{QE}$ *(s)* et $W_{QC}$ *(s)* qui sont respectivement une consigne de position de chaque axe d'excitation et chaque axe compliant,

avec un terme $G_{CLE}$ *(s)* · $W_{QE}$ (s) pour chaque axe d'excitation,

sur base de ladite première relation étant calculée une fonction de transfert de compensation $G_{COMP}$ (s) selon une seconde relation:

$$G_{COMP}\left(\mathrm{s}\right) = -\frac{G_{CLE}\left(s\right)}{s^2.G_{CLC}\left(s\right)}$$

avec un terme $G_{CLE}$ (s) pour chaque axe d'excitation, chaque terme s'additionnant au numérateur de ladite seconde relation.

8. Programme d'ordinateur adapté pour mettre en œuvre la méthode selon l'une quelconque des revendications précédentes et, en particulier, pour déterminer la compensation à appliquer sur chaque axe compliant.

9. Commande numérique sur laquelle est implémenté le programme d'ordinateur selon la revendication 8.

**Patentansprüche**

1. Methode zur Begrenzung von Schwingungsphänomenen an einer Werkstück-Werkzeug-Schnittstelle auf einer Bearbeitungsmaschine, umfassend 3, 4 oder 5 Maschinenachsen, wobei die besagte Methode die folgenden Schritte umfasst:

    - Identifizieren mindestens einer Maschinenachse, die als konforme Achse bezeichnet wird, die während einer Beschleunigungsphase mindestens einer Maschinenachse, bezeichnet als Erregungsachse, erregt werden kann, die verschieden von besagtem mindestens einen konformen Achse ist, und nach dieser Erregung eine relative Verschiebung zwischen dem Werkstück und dem Werkzeug gemäß einer kollinearen Richtung induzieren kann,

    - Anwenden einer Kompensierung auf jede konforme Achse während der Beschleunigungsphase und einer Phase mit konstanter Geschwindigkeit nach der Beschleunigungsphase besagter mindestenseinen Erregungsachse, um jede relative Verschiebung zwischen dem Werkstück und dem Werkzeug zu reduzieren.

2. Methode nach Anspruch 1, **dadurch gekennzeichnet, dass** das Identifizieren besagter mindestens einenkonformen Achse experimentell oder auf der Basis von digitalen Simulationen erfolgt.

3. Methode nach Anspruch 2, **dadurch gekennzeichnet, dass** das Identifizieren besagter mindestens einenkonformen Achse experimentell oder auf der Basis von Messungen der Eigenfrequenzen der Bearbeitungsmaschine erfolgt.

4. Methode nach Anspruch 3, **dadurch gekennzeichnet, dass** das Identifizieren besagter mindestens einenkonformen Achse auf der Bearbeitungsmaschine erfolgt, die mit einem oder mehreren Sensor(en) ausgestattet ist, die es ermöglichen, die Schwingungen zu messen, die von der Beschleunigungsphase besagter mindestens einen Erregungsachse induziert werden, wobei die Identifizierung vor der Bearbeitung des Werkstücks erfolgen kann.

5. Methode nach irgendeinem der vorhergehenden Ansprüche, **dadurch gekennzeichnet, dass** das Identifizieren besagter mindestens einen konformen Achse auf wiederholte Weise oder eine einziges Mal erfolgt.

6. Methode nach irgendeinem der vorhergehenden Ansprüche, **dadurch gekennzeichnet, dass** die Kompensierung, die auf jede konforme Achse angewendet werden soll, auf der Basis von Positions- und Beschleunigungswerten besagter mindestens einen Erregungsachse bestimmt wird.

7. Methode nach irgendeinem der vorhergehenden Ansprüche, **dadurch gekennzeichnet, dass** die Kompensierung, die auf jede konforme Achse angewendet werden soll, auf der Basis einer ersten Beziehung bestimmt wird:

$$Q_{CR}(s) = G_{CLE}(s) \cdot W_{QE}(s) + G_{CLC}(s) \cdot W_{QC}(s) = 0$$

wobei S eine Variable der Laplace-Transformation ist,
$Q_{CR}(S)$ die Verschiebung Werkstück-Werkzeug gemäß jeder konformen Achse ist, die gleich 0 sein muss,
$G_{CLE}(S)$ eine Übertragungsfunktion im Regelkreis jeder Erregungsachse ist,
$G_{CLC}(S)$ eine Übertragungsfunktion im Regelkreis jeder konformen Achse ist,
$W_{QE}(S)$ und $W_{QC}(S)$ jeweils ein Positionswert jeder Erregungsachse und jeder konformen Achse sind,
mit einem Term $G_{CLE}(S) \cdot W_{QE}(S)$ für jede Erregungsachse,
wobei auf der Basis der ersten Beziehung eine Übertragungsfunktion der Kompensierung $G_{COMP}(S)$ gemäß einer zweiten Beziehung berechnet wird;

$$G_{COMP}(s) = - \frac{G_{CLE}(s)}{s^2 . G_{CLC}(s)}$$

mit einem Term $G_{CLE}(S)$ für jede Erregungsachse, wobei jeder Term dem Zähler der besagten zweiten Beziehung zugefügt wird.

8. Computerprogramm, das ausgelegt ist, um die Methode nach irgendeinem der vorhergehenden Ansprüche durchzuführen, und insbesondere, um die Kompensierung, die auf jeder konformen Achse angewendet werden soll, zu bestimmen.

9. Digitale Steuerung, auf der das Computerprogramm nach Anspruch 8 implementiert ist.

**Claims**

1. Method for limiting vibratory phenomena at a part-tool interface on a machining tool comprising 3, 4 or 5 machining tool axes, said method comprising the steps of:

   - Identifying at least one machining tool axis, called compliant axis, able to be excited during an acceleration phase of at least one machining tool axis, called excitation axis, that is separate from said at least compliant axis, and to induce, following this excitation, a relative movement between the part and the tool along a direction collinear with said at least compliant axis,
   - Applying a compensation on each compliant axis during the acceleration phase and a phase of constant speed following the acceleration phase of said at least excitation axis in order to reduce any relative movement between the part and the tool.

2. Method according to claim 1, **characterized in that** the identification of said at least compliant axis is done experimentally or based on digital simulations.

3. Method according to claim 2, **characterized in that** the identification of said at least compliant axis is done experimentally based on measurements of the natural frequencies of the machining tool.

4. Method according to claim 3, **characterized in that** the identification of said at least compliant axis is done on the machining tool provided with one or several sensors making it possible to measure vibrations induced by the acceleration phase of said at least excitation axis, in which the identification can be done prior to the machining of the part.

5. Method according to any one of the preceding claims, **characterized in that** the identification of said at least compliant axis is done recurrently or only once.

6. Method according to any one of the preceding claims, **characterized in that** the compensation to be applied on each compliant axis is determined based on position and acceleration set points of said at least excitation axis.

7. Method according to any one of the preceding claims, **characterized in that** the compensation to be applied on each compliant axis is determined based on a first relationship:

$$Q_{CR}(s) = G_{CLE}(s) \cdot W_{QE}(s) + G_{CLC}(s) \cdot W_{QC}(s) = 0$$

with s being a variable of the Laplace transform,
$Q_{CR}(s)$ being the part-tool movement along each compliant axis, which must be equal to 0,
$G_{CLE}(s)$ being a closed-loop transfer function of each excitation axis,
$G_{CLC}(s)$ being a closed-loop transfer function of each compliant axis,
$W_{QE}(s)$ and $W_{QC}(s)$, being respectively a position set point of each excitation axis and each compliant axis,
with a term $G_{CLE}(s) \cdot W_{QE}(s)$ for each excitation axis,
based on said first relationship, a compensation transfer function $G_{COMP}(s)$ being calculated according to a second relationship:

$$G_{COMP}(s) = -\frac{G_{CLE}(s)}{s^2 . G_{CLC}(s)}$$

with a term $G_{CLE}(s)$ for each excitation axis, each term being added to the numerator of said second relationship.

8. Computer program suitable for implementing the method according to any one of the preceding claims and, in particular, for determining the compensation to be applied on each compliant axis.

9. Numerical control on which the computer program according to claim 8 is implemented.

FIG.1

FIG.2

FIG.3

FIG.4

FIG.5

## RÉFÉRENCES CITÉES DANS LA DESCRIPTION

**Littérature non-brevet citée dans la description**

- **OKWUDIRE C.** A trajectory optimization method for improved tracking of motion commands using CNC machines that experience unwanted vibration. *CIRP Annals,* 07 Juin 2016, vol. 65 (1), 373-376